# EUROPEAN PATENT APPLICATION

(11) **EP 1 439 722 A1**
(43) Date of publication of application: **21.07.2004**
(21) Application number: 04000039.0
(22) Date of filing: 03.01.2004
(51) Int. Cl.: H04Q 7/32

(54) **Method and system for the provision of a service to a mobile terminal**

(30) Priority: 17.01.2003 KR 2003003358
(71) Applicant: LG ELECTRONICS INC., Seoul (KR)
(72) Inventor: Min, Sang-Cheol, Goyang Gyeonngi-do (KR)
(74) Representative: Vetter, Ewald Otto

(57) **Abstract**

A service method and system of a mobile terminal is disclosed to provide lots of pieces of open information that users own. For this purpose, open information stored in a first mobile terminal (21B) is provided to a second mobile terminal (21A) through a P2P network, and the provided information is displayed on a screen of the second mobile terminal.

## Description

### BACKGROUND OF THE INVENTION

### 1. Field of the Invention

The present invention relates to a mobile terminal and, more particularly,, to a service method and system of a mobile terminal.

### 2. Description of the Background Art

Recently, as mobile phones are widely spread for use, a demand for improvement in an IP service which has been limited in a high speed wireless data communication network (i.e., IS-95A and IS-95B) is increasing. In general, a CDMA (Code Division Multiple Access)-2000 or W-CDMA (Wideband Code Division Multiple Access) ensures a data transfer rate of 300Kbps up to a maximum 2Mbps when a mobile terminal is in a stop state.

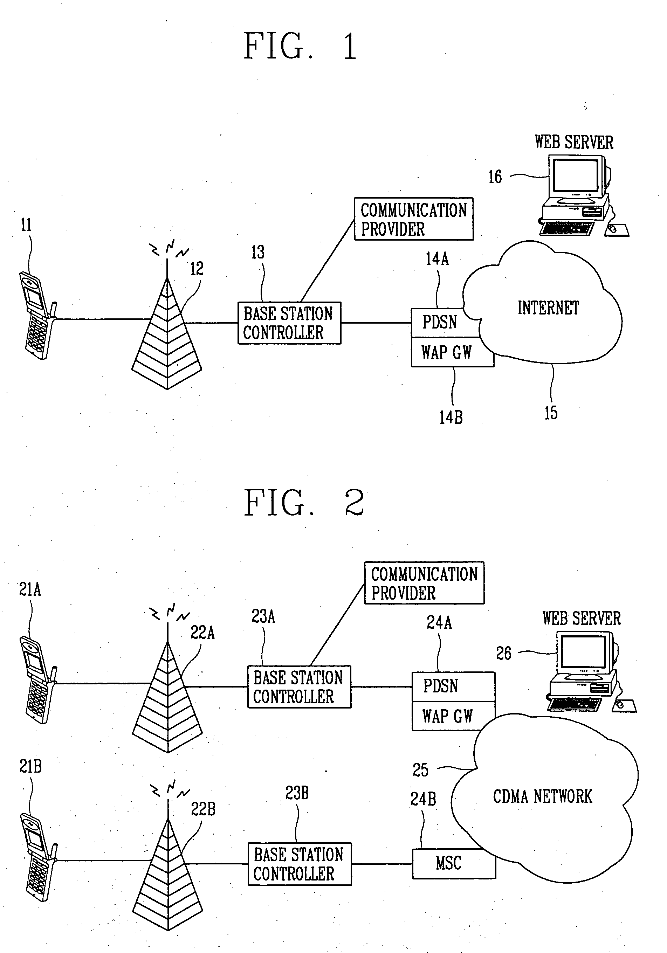

Though there is a little difference between the CDMA and in a GSM (Group Special Mobile), the basic structure of an IP service model of the conventional mobile terminal is as shown in Figure 1.

Figure 1 is a view showing a construction of a system providing an IP service to a mobile terminal in accordance with a conventional art.

The construction of the system providing the IP service will now be described.

First, when a user desires to receive an Internet service by his/her mobile terminal 11, he/she obtains an IP by being connected to a communication provider (i.e., 019 or 016 in Korea) through a PPP (Point-to-Point Protocol). For example, if the user's mobile terminal is the 019 mobile terminal, it is automatically connected to the 019 communication provider to obtain an IP, and if a user's mobile terminal is a 016 mobile terminal, the mobile terminal is automatically connected to a 016 communication provider to obtain an IP. After the mobile terminal 11 is connected to a Web server 16 of the communication provider through the obtained IP address, it requests a service from a desired Web server 16. Herein, the mobile terminal 11 obtains the IP address from the communication provider through a base station 12 and a base station controller 13.

Thereafter, when IP data information is transferred to a packet data serving node (PDSN) 14A through a channel of the CDMA, the PDSN 14A converts the data information of the mobile terminal 11 into a packet. At this time, when the mobile terminal 11 is connected to the Web server 16 through the Internet 15, the PDSN 14A transfers the converted packet to a WAP (Wireless Application Protocol) gateway 14B. In this respect, a WML (Wireless Markup Language) is converted into a HTML (Hypertext Markup Language), and a HTML is converted into a WML for a mutual service exchange in a form suitable for a bandwidth of the mobile terminal.

Meanwhile, in the WAP 2.0, the HTTP can be used as it is without being converted, so a Web service is directly available without a specific conversion. Namely, the environment supporting the WAP 2.0 is an IMT-2000 (International Mobile Telecommunication-2000) environment and a bandwidth for the IP service is sufficient. Other services than the Web connection is performed in the same manner as the general IP service through the PDSN 14A.

However, the service method of the mobile terminal in accordance with the conventional art has the following problems.

That is, the mobile terminal user can be connected to the Web server 16 of the communication provider to receive information from the Web server 16, but since the mobile terminal can not be used as one information sharing unit mobile terminal users can not be provided with various services. In other words, it is not possible to request specific information (i.e., a phone number of a third party) from a mobile terminal of the other party, or it is not possible to receive a request for specific information from a mobile terminal of the other party. Thus, the conventional mobile terminal fails to receive diverse information from the mobile terminal of the other party.

### SUMMARY OF THE INVENTION

Therefore, a first object of the present invention is to provide a service method and system of a mobile terminal capable of providing open information stored in a first mobile terminal to a second mobile terminal and displaying the provided information on a screen of the second mobile terminal.

A second object of the present invention is to provide a service method and system of a mobile terminal capable of connecting to a first mobile terminal through a phone number of the first mobile terminal and displaying open information previously stored in the first mobile terminal on a screen of a second mobile terminal.

A third object of the present invention is to provide a service method and system of a mobile terminal capable of connecting a first mobile terminal and a second mobile terminal through a peer-to-peer network and displaying open information previously stored in the first mobile terminal on a screen of the second mobile terminal.

A fourth object of the present invention is to provide a service method and system of a mobile terminal capable of operating one mobile terminal as one server.

A fifth object of the present invention is to provide a service method and system of a mobile terminal capable of allowing a first mobile terminal and a second mobile terminal to share service-available information when they are connected.

To achieve these and other advantages and in accordance with the purpose of the present invention, as embodied and broadly described herein, there is provided a service method of a mobile terminal including: providing open information stored in the first mobile terminal to a second mobile terminal; and displaying the provided open information on a screen of the second mobile terminal.

To achieve the above objects, there is also provided a service method of a mobile terminal including: providing open information previously stored in a second mobile terminal to a first mobile terminal through a peer-to-peer network; and displaying the provided open information on a screen of the first mobile terminal.

To achieve the above objects, there is also provided a service method of a mobile terminal including: a step in which a first mobile terminal is connected to a phone-page of a second mobile terminal through a peer-to-peer network; a step in which menus of the phone-page of the second mobile terminal are displayed on a screen of the first mobile terminal; and a step in which information included in a menu selected by a user of the first mobile terminal among the displayed menus is received from the second mobile terminal.

To achieve the above objects, there is also provided a service method of a mobile terminal including: a step in which a first mobile terminal obtains an IP address of a second mobile terminal from a Web server; a step in which the first mobile terminal is connected to a phone page of the second mobile terminal through an IP address; a step in which menus of the phone page of the second mobile terminal are displayed on a screen of the first mobile terminal; and a step in which information included in the menu selected by a user of the first mobile terminal among the displayed menu is received from the second mobile terminal.

To achieve the above objects, there is also provided a service system of a mobile terminal for receiving a service by being connected to a CDMA network through a base station, a base station controller and a PDSN (Packet Data Serving Node), wherein open information stored in the first mobile terminal is received through a peer-to-peer network and the received open information is displayed on a screen of the second mobile terminal.

To achieve the above objects, there is also provided a service system of a mobile terminal for receiving a service by being connected to a CDMA network through a base station, a base station controller and a PDSN, wherein when a phone number of the second mobile terminal is inputted to a first mobile terminal, an IP address corresponding to the phone number of the second mobile terminal is obtained from a Web server, it is connected to a phone page of the second mobile terminal through the IP address, menus of the phone page of the second mobile terminal are displayed on a screen of the first mobile terminal, and information included in a menu selected by a user of the first mobile terminal among the displayed menu is received from the second mobile terminal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a view showing a construction of a system providing an IP service to a mobile terminal in accordance with a conventional art;
Figure 2 is a view showing a P2P service system of a mobile terminal in accordance with a preferred embodiment of the present invention;
Figures 3A to 3E are exemplary views showing P2P service image displayed on a screen of the mobile terminal in accordance with the preferred embodiment of the present invention; and
Figure 4 is a flow chart of the P2P service method of the mobile terminal in accordance with the preferred embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

A service method and system of a mobile terminal, which is capable of providing open information stored in a first mobile terminal to a second mobile terminal and displaying the provided open information on a screen of the second mobile terminal, thereby providing much open information stored in each mobile terminal to mobile terminal users, will now be described in detail with reference to Figures 2 to 4.

Figure 2 is a view showing a P2P service system of a mobile terminal in accordance with a preferred embodiment of the present invention.

As shown in Figure 2, a P2P service system of a mobile terminal includes a base station 22A for communication connection between one mobile terminal 21A and a CDMA network 25, a base station controller (BSC) 23A, and a PDSN 24A; and a base station 22B for a communication connection between another mobile terminal 21B and the CDMA network 25, a base station controller 23B and a mobile switching center (MSC) 24B.

That is, the mobile terminal 21A and the mobile terminal 21B are P2P connected through a phone number and obtain each other's phone page information. Herein, the phone page refers to a mobile terminal-dedicated home page or a Web page, and data of the phone page is stored in a storing unit of each mobile terminal 21a and 21b.

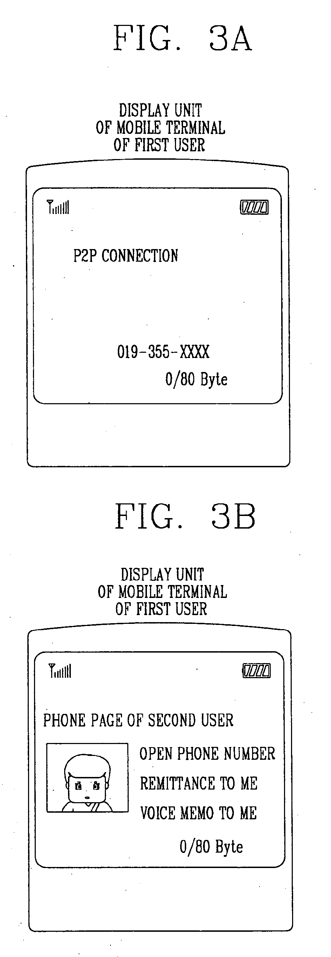

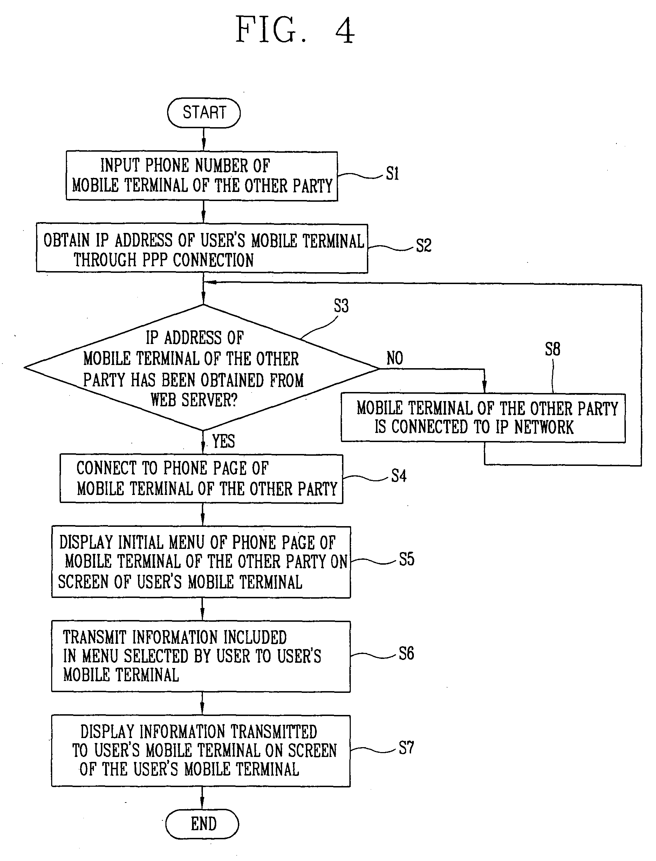

The operation of the P2P service system of the mobile terminal will now be described in detail with reference to Figures 3A~3E and Figure 4.

Figures 3A to 3E are exemplary views showing P2P service image displayed on a screen of the mobile terminal in accordance with the preferred embodiment of the present invention, and Figure 4 is a flow chart of the P2P service method of the mobile terminal in accordance with the preferred embodiment of the present invention.

That is, a process that the mobile terminal 21A of a first user is connected to the mobile terminal 21B through a series of communication network by way of the CDMA network 25, that is, the base station 22A, the base station controller 23A, the PDSN 24A, the CDMA network 25, the mobile switching center 24B, the base station controller 23B and the base station 22B, and obtains open information (e.g., open phone numbers) of the second user included in a phone page menu of the mobile terminal of the second user, will be taken as an example with reference to Figure 4.

Herein, the open information means diverse information laid open by the second user, including phone numbers of friends or information on birthdays of friends corresponding to the phone numbers (open personal information) and personal information of a third party. The phone page menu may include at least one or more menus of an opening phone number, remittance and a voice memo.

First, the first user inputs a phone number of the second user mobile terminal 21B to the mobile terminal 21A, and depresses a button previously installed in the mobile terminal 21A for an Internet access, instead of depressing a call button. Then, as shown in Figure 3A, a message of 'P2P connecting'. is displayed on an LCD (Liquid Crystal Display) screen of the first user mobile terminal 21A (step S1).

The first user mobile terminal 21A. obtains an IP from a communication provider through a PPP connection (step S2), and reads an IP address corresponding to the phone number of the second user (step S3). Herein, when the first user mobile terminal 21A inputs the phone number of the second user mobile terminal 21B, the Web server 26 transmits the IP address corresponding to the phone number of the second user to the first user mobile terminal 21A.

If, however, the mobile terminal 21B of the second user is not connected (that is, if there is no IP address of the mobile terminal 21B of the second user), the first user mobile terminal 21A transfers connection request information requesting allowance of connection to the second user mobile terminal 21B to the mobile terminal 21B of the second user, so that the second user mobile terminal 21B can be connected to the IP network. In this case, preferably, the connection is selectively allowed only for users who are allowed for the service (step S8).

Thereafter, the first user mobile terminal 21A is connected to the phone page of the mobile terminal 21B of the second user through the obtained IP address (step S4). That is, when the first user inputs only the phone number of the second user, he/she can be connected to the phone page of the mobile terminal 21B of the second user through the obtained IP address. When the first user mobile terminal is connected to the second user mobile terminal 21B through the obtained IP address, the second user mobile terminal 21B displays an initial menu of its phone page on a screen of the first user mobile terminal 21A as shown in Figure 3B. As a background image of the initial menu, a photo or a graphic previously set by the second user can be displayed, or can be set by the first user (step S5).

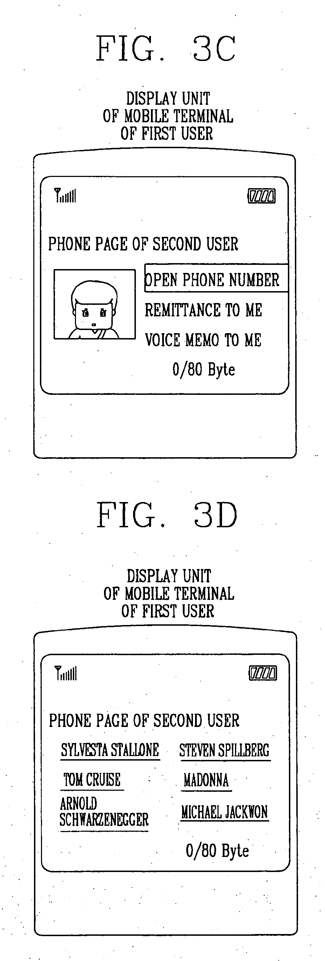

Thereafter, as shown in Figure 3C, when the first user selects a desired menu (e.g., an open phone number) from the initial menus of the phone page of the second user mobile terminal 21B by using a direction key of the mobile terminal 21A, the second user mobile terminal 21B transmits information corresponding to the selected menu to the first user mobile terminal 21A (step S6).

Then, the first user mobile terminal 21A displays names of persons included in the information transmitted from the second user mobile terminal 21B on its screen as shown in Figure 3D.

When the first user selects a name of a desired person (e.g., Madonna') from persons displayed on the screen of the mobile terminal 21A by using the direction key, the second user mobile terminal 21B transmits information corresponding to the selected name to the first user mobile terminal 21A.

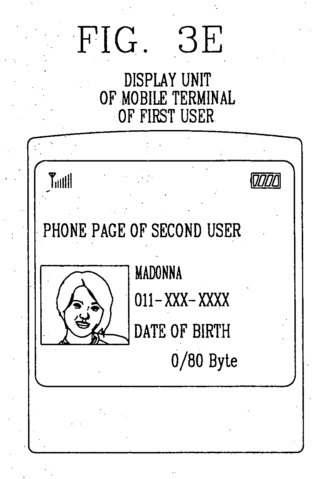

Thereafter, as shown in Figure 3E, the first user mobile terminal 21A displays the name of 'Madonna', the finally selected person included in the information transmitted from the second user mobile terminal 21B, his phone number, his birth date or the like, on the screen of the first user mobile terminal 21A. Accordingly, the first user can be aware the phone number of the desired person (Madonna). Namely, without storing the phone number of the specific person in the mobile terminal, the first user can know the phone number of the person through the mobile terminal of the second user (step S7).

Assuming that a user of the mobile terminal 21A is a 'first user' and the other party, that is, a user of the mobile terminal 21B is a 'second user', an application example of the peer-to-peer network will now be described.

The first user wants to know a phone number of a friend, a 'third user', but he/she doesn't know the phone number. But the first user knows a phone number of a friend, the second user who knows the phone number of the third user. Thus, the first user makes a phone call to the second user in order to ask about the phone number of the third user, but no answer. In this case, the first user can easily and quickly obtains the phone number of the third user from the mobile terminal 21B of the second user through the peer-to-peer network, without asking the second user about the phone number of the third user and even without interrupting a privacy of the second user. Herein, the second user of the second mobile terminal 21B is never interrupted by the first user until the open information stored in the second user mobile terminal 1B is displayed on the screen of the first user mobile terminal 21A.

As so far described, the service method and system of a mobile terminal. In accordance with the present invention have the following advantages.

That is, first, by devising a fresh type of service model on the basis of the peer-to-peer (P2P) network between mobile terminals, diverse services can be provided by using lots of pieces of open information that respective users have.

Second, the open information stored in the mobile terminal of the first user is displayed on the screen of the mobile terminal of the second user, mobile terminal users can obtain various information (i.e., open information).

Third, a user is connected to a mobile terminal of the other party through a phone number of the mobile terminal of the other party by using his/her mobile terminal, and displays open information previously stored in the mobile terminal of the other party on a screen of his/her mobile terminal. Thus, much information (i.e., open information) can be quickly and easily obtained. In other words, rather than being connected to the mobile terminal of the other party through an address such as a URL-(Uniform Resource Locator), the user can be easily connected to a phone page of the mobile terminal of the other party by using the phone number of the other party, and thus, he/she can easily obtain desired information from the mobile terminal of the other party.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

The features of the description, the claims and the drawings, single or in any combination, are patentable and claimed, as far as not excluded by the prior art. Each claim can depend on any one or more of the other claims.

## Claims

1. A service method of a mobile terminal comprising:
providing open information stored in the first mobile terminal to a second mobile terminal; and
displaying the provided open information on a screen of the second mobile terminal.

2. A service method of a mobile terminal comprising:
providing open information previously stored in a second mobile terminal to a first mobile terminal through a peer-to-peer network; and
displaying the provided open information on a screen of the first mobile terminal.

3. The method of claim 2, wherein the open information is included in a menu of a phone page of the second mobile terminal.

4. The method of claim 2, wherein the open information is phone numbers previously stored by the second mobile terminal or open personal information corresponding to the phone numbers.

5. A service method of a mobile terminal comprising:
a step in which a first mobile terminal is connected to a phone-page of a second mobile terminal through a peer-to-peer network;
a step in which menus of the phone-page of the second mobile terminal, are displayed on a screen of the first mobile terminal; and
a step in which information included in a menu selected by a user of the first mobile terminal among the displayed menus is received from the second mobile terminal.

6. The method of claim 5, wherein the first mobile terminal is connected to a phone page of the mobile terminal of the second user through a phone number of the second mobile terminal.

7. The method of claim 5, wherein the information included in the menu selected by the user is open information previously stored by the second user and/or personal information laid open by a third party.

8. The method of claim 5, wherein the connecting step comprises:
a step in which the first mobile terminal obtains an IP address corresponding to the phone number of the second mobile terminal from a Web server; and
a step in which the first mobile terminal is connected to a phone page of the second user mobile terminal through the IP address of the second mobile terminal obtained from the Web server.

9. A service method of a mobile terminal comprising:
a step in which a first mobile terminal obtains an IP address of a second mobile terminal from a Web server;
a step in which the first mobile terminal is connected to a phone page of the second mobile terminal through an IP address;
a step in which menus of the phone page of the second mobile terminal are displayed on a screen of the first mobile terminal; and
a step in which information included in the menu selected by a user of the first mobile terminal among the displayed menu is received from the second mobile terminal.

10. The method of claim 9 further comprising:
a step in which if an IP address of the second mobile terminal is not provided from the Web server to the first mobile terminal, the first mobile terminal requests connection to the second mobile terminal so that the second mobile terminal can be connected to an IP network through a CDMA (Code Division Multiple Access) channel.

11. The method of claim 9, wherein the menu of the phone page includes at least one of an open phone number, remittance and a voice memo.

12. A service system of a mobile terminal for receiving a service by being connected to a CDMA network through a base station, a base station controller and a PDSN (Packet Data Serving Node),
wherein open information stored in the first mobile terminal is received through a peer-to-peer network and the received open information is displayed on a screen of the second mobile terminal.

13. A service system of a mobile terminal for receiving a service by being connected to a CDMA network through a base station, a base station controller and a PDSN,
wherein when a phone number of the second mobile terminal is inputted to a first mobile terminal, an IP address corresponding to the phone number of the second mobile terminal is obtained from a Web server, it is connected to a phone page of the second mobile terminal through the IP address, menus of the phone page of the second mobile terminal are displayed on a screen of the first mobile terminal, and information included in a menu selected by a user of the first mobile terminal among the displayed menu is received from the second mobile terminal.
